(19) Europäisches Patentamt
European Patent Office
Office européen des brevets

(11) **EP 3 492 955 A1**

(12) **DEMANDE DE BREVET EUROPEEN**

(43) Date de publication:
**05.06.2019 Bulletin 2019/23**

(51) Int Cl.:
*G02B 6/00* *(2006.01)*    *F21S 41/00* *(2018.01)*

(21) Numéro de dépôt: **19152472.7**

(22) Date de dépôt: **03.08.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2015 FR 1557584**

(62) Numéro(s) de document de la (des) demande(s) initiale(s) en application de l'article 76 CBE:
**16182530.2 / 3 128 226**

(71) Demandeur: **Valeo Vision**
**93012 Bobigny Cedex (FR)**

(72) Inventeur: **GROMFELD, Yves**
**49000 ANGERS (FR)**

(74) Mandataire: **Valeo Vision**
**IP Department**
**34, rue Saint André**
**93012 Bobigny (FR)**

Remarques:
Cette demande a été déposée le 18.01.2019 comme demande divisionnaire de la demande mentionnée sous le code INID 62.

(54) **MODULE LUMINEUX EN MATERIAU TRANSPARENT AVEC DEUX FACES DE REFLEXION**

(57) L'invention a trait à un module lumineux (2), notamment pour véhicule automobile, comprenant un corps (4) en matériau translucide ou transparent avec une face d'entrée (6) de rayons lumineux produits par une ou plusieurs sources lumineuses, une première face de réflexion (8) avec un bord de coupure (14) des rayons provenant de la face d'entrée (6), une deuxième face de réflexion (10), vers la face de sortie (12), des rayons provenant de la première face de réflexion (8), et une face de sortie (12) des rayons lumineux en un faisceau de sortie suivant un axe optique du module. L'invention a trait également à un projecteur comprenant au moins un tel module lumineux.

FIG 1

EP 3 492 955 A1

**Description**

L'invention a trait au domaine de l'éclairage, notamment l'éclairage pour véhicule automobile. L'invention a également trait à un projecteur d'éclairage comprenant un tel module.

Le document de brevet publié FR 3 010 772 A1 divulgue un module d'éclairage avec un corps en matériau transparent comprenant une face d'entrée de la lumière produite par une ou plusieurs sources lumineuses, une face de réflexion avec un bord de coupure et une face de sortie des rayons. La face d'entrée comprend une cavité formée à une extrémité du module, dans le matériau transparent, et délimitée par une surface circulaire formant un dioptre apte à dévier les rayons entrant vers la surface extérieure et périphérique du corps. Les rayons sont alors réfléchis sur la surface extérieure, par application du principe de réflexion totale, pour converger vers le bord de coupure. La face de sortie est généralement convexe et est à l'extrémité opposée du module. La face de réflexion est formée par une entaille formée dans une portion latérale du matériau transparent, entre les faces d'entrée et de sortie. L'arête au creux de l'entaille forme le bord de coupure des rayons et la face de l'entaille située du côté de la face d'entrée forme une face de réflexion en vertu du principe de réflexion totale. Cette face de réflexion est couramment appelée « plieuse » en ce qu'elle « replie » une partie des rayons vers le bas du faisceau. Les rayons provenant de la face d'entrée se propagent dans le matériau transparent essentiellement suivant l'axe longitudinal et optique du module. La majeure partie des rayons passe au niveau du bord de coupure sans subir de réflexion et sortent par la face de sortie. Une partie des rayons rencontre la face de réflexion ou plieuse disposée avant le bord de coupure, pour y subir une réflexion vers une portion haute du corps transparent. Ces rayons rencontrent alors la face de sortie avec un angle d'incidence important. Ils y subissent ainsi une réfraction importante et sont dirigés vers une portion basse du faisceau lumineux. C'est ainsi que le bord de la plieuse permet de réaliser une coupure horizontale du faisceau lumineux. Ce module est intéressant en ce qu'il permet de réaliser avec un nombre d'éléments très réduit un faisceau lumineux à coupure performant. Il présente toutefois l'inconvénient qu'il requiert un certain espace suivant l'axe optique. Le corps transparent s'étend en effet selon son axe longitudinal essentiellement suivant l'axe optique du module. De plus, de par sa forme la face de sortie ne peut servir de face de style, c'est-à-dire directement visible depuis l'extérieur du dispositif d'éclairage comprenant le module. Il est donc nécessaire de prévoir une surface supplémentaire de style ce qui augmente également l'encombrement.

L'invention a pour objectif de pallier au moins un problème de l'état de la technique, en l'occurrence de l'état de la technique susmentionné. Plus précisément, l'invention a pour objectif de proposer un module lumineux compact, en particulier suivant son axe optique.

L'invention a pour objet un module lumineux, notamment pour véhicule automobile, comprenant un corps en matériau translucide ou transparent avec : une face d'entrée de rayons lumineux produits par une ou plusieurs sources lumineuses ; une première face de réflexion avec un bord de coupure des rayons provenant de la face d'entrée ; une face de sortie des rayons lumineux en un faisceau de sortie suivant un axe optique du module ; remarquable en ce qu'il comprend, en outre, une deuxième face de réflexion, vers la face de sortie, des rayons provenant de la première face de réflexion.

Selon un mode avantageux de l'invention, la première face de réflexion forme un dioptre apte à réfléchir, par le principe de réflexion totale, une partie des rayons provenant de la face d'entrée.

Selon un mode avantageux de l'invention, la première face de réflexion forme un angle compris entre 5° et 40° avec la direction moyenne des faisceaux lumineux se propageant depuis la face d'entrée jusqu'à ladite face de réflexion.

Selon un mode avantageux de l'invention, la première face de réflexion comprend deux portions adjacentes formant une arête dirigée vers la deuxième face de réflexion et/ou la face de sortie, lesdites portions formant, transversalement à ladite arête, un profil convexe.

Selon un mode avantageux de l'invention, le bord de coupure est formé par l'intersection de la première face de réflexion avec une face intermédiaire située entre la première face de réflexion et la deuxième face de réflexion, ladite première face de réflexion et ladite face intermédiaire formant un profil concave.

Selon un mode avantageux de l'invention, la face intermédiaire comprend deux portions adjacentes formant une arête dirigée vers la deuxième face de réflexion, lesdites portions formant, transversalement à ladite arête, un profil convexe.

Selon un mode avantageux de l'invention, la deuxième face de réflexion s'étend entre la face intermédiaire et la face de sortie.

Selon un mode avantageux de l'invention, la deuxième face de réflexion est généralement courbe et convexe.

Selon un mode avantageux de l'invention, la deuxième face de réflexion forme un dioptre apte à réfléchir, par le principe de réflexion totale, les rayons provenant de la première face de réflexion.

Selon un mode avantageux de l'invention, le corps comprend une première portion s'étendant depuis la face d'entrée jusqu'à la deuxième face de réflexion suivant une direction principale formant un angle compris entre 60° et 120° avec l'axe optique.

Selon un mode avantageux de l'invention, le module comprend une deuxième portion s'étendant depuis la deuxième face de réflexion jusqu'à la face de sortie, suivant l'axe optique.

Selon un mode avantageux de l'invention, la face d'entrée comprend un ou plusieurs collimateurs aptes à dévier les rayons lumineux d'une ou plusieurs sources lumineuses, respectivement, de manière à former un ou plusieurs faisceaux de rayons dirigés vers la deuxième face de réflexion et passant devant le bord de coupure.

Selon un mode avantageux de l'invention, le collimateur, ou chacun des collimateurs, est formé par une protubérance du corps avec une surface extérieure circulaire préférentiellement de profil elliptique, ladite protubérance comprenant une cavité apte à recevoir la source lumineuse correspondante.

Selon un mode avantageux de l'invention, la face d'entrée comprend un ou plusieurs collimateurs aptes à dévier les rayons lumineux d'une ou plusieurs sources lumineuses, respectivement, vers un point ou segment de convergence situé sur le bord de coupure.

Selon un mode avantageux de l'invention, le collimateur ou chacun des collimateurs est formé par une protubérance du corps, ayant une surface extérieure circulaire de profil elliptique et une cavité apte à recevoir la source lumineuse correspondante.

Selon un mode avantageux de l'invention, les collimateurs sont au nombre d'au moins trois et forment, sur la face d'entrée, au moins une rangée s'étendant perpendiculairement à l'axe optique.

Selon un mode avantageux de l'invention, le module comprend les sources lumineuses, lesdites sources étant du type source lumineuse à semi-conducteur, par exemple du type diode à électroluminescence, disposées sur une platine commune.

Selon un mode avantageux de l'invention, le faisceau de sortie est un faisceau d'éclairage à coupure horizontale ou verticale.

L'invention a également pour objet un projecteur d'éclairage pour véhicule automobile comprenant un boîtier et au moins un module lumineux, remarquable en ce que le module lumineux est conforme à l'invention.

Selon un mode avantageux de l'invention, le projecteur comprend deux des modules lumineux, disposés côte-à-côte et dont les faisceaux de sortie se superposent, l'un desdits modules formant un faisceau étendu à coupure généralement droite et l'autre formant un faisceau étroit à coupure horizontale avec un ressaut.

Selon un mode avantageux de l'invention, la face de sortie du module lumineux est une surface de style, c'est-à-dire une surface visible depuis l'extérieur du projecteur.

Les mesures de l'invention sont intéressantes en ce qu'elles permettent de réaliser un module lumineux particulièrement compact selon la direction de l'axe optique, c'est-à-dire l'axe longitudinal du véhicule. L'utilisation d'une plieuse dioptrique, à savoir que la première face de réflexion réfléchit les rayons par le principe de réflexion totale, est avantageuse notamment en ce qu'elle rend le module plus tolérant aux défauts de focalisation. De plus, l'utilisation de plusieurs collimateurs sur la face d'entrée permet de composer le faisceau lumineux et confère ainsi une grande flexibilité pour la réalisation de différentes fonctions. De plus, le module prévoit une face de sortie commune, ce qui présente des avantages en termes d'esthétique et de précision du faisceau total résultant de l'addition des faisceaux produits par les différents collimateurs.

D'autres caractéristiques et avantages de la présente invention seront mieux compris à l'aide de la description et des dessins parmi lesquels :

- La figure 1 est une vue en perspective d'un module lumineux conforme à l'invention ;
- La figure 2 est un vue en perspective arrière du module de la figure 1 ;
- La figure 3 est un vue en coupe suivant un plan longitudinal médian du module des figures 1 et 2 ;
- La figure 4 est une vue en perspective de détail de la portion inférieure du module des figures 1 à 3 ;
- La figure 5 est une représentation schématique du parcours d'une partie des rayons du module des figures 1 à 4 ;
- La figure 6 est une représentation schématique du parcours des rayons du module des figures 1 à 4.

Dans la description qui va suivre, les termes relatifs tels que « haut(e)(s) », « supérieur(e)(s) », « bas(se)(s) », « inférieur(e)(s) », « avant » et « arrière » sont à comprendre en relation avec l'orientation du module selon les figures, étant entendu que le module peut en pratique prendre d'autres orientations.

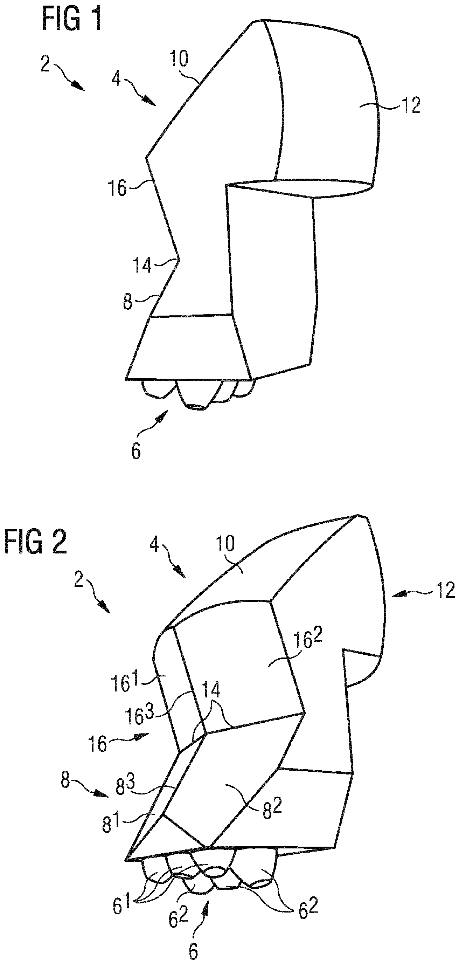

Les figures 1 à 4 illustrent un module lumineux conforme à l'invention. Le module 2 comprend essentiellement un corps 4 et des sources lumineuses (non représentées).

Le corps 4 est fait majoritairement, préférentiellement totalement, d'un matériau transparent ou translucide. Ce matériau peut être du verre ou préférentiellement du plastique, comme notamment du polycarbonate (PC).

Le corps 4 comprend une face d'entrée 6 pour la lumière produite par les sources lumineuses. Ces dernières peuvent être des diodes à électroluminescence ou encore du type laser. Le corps 4 comprend également une première face de réflexion 8, destinée à réfléchir une partie seulement des rayons, une deuxième face de réflexion 10, destinée elle à réfléchir la quasi-totalité des rayons, et une face de sortie.

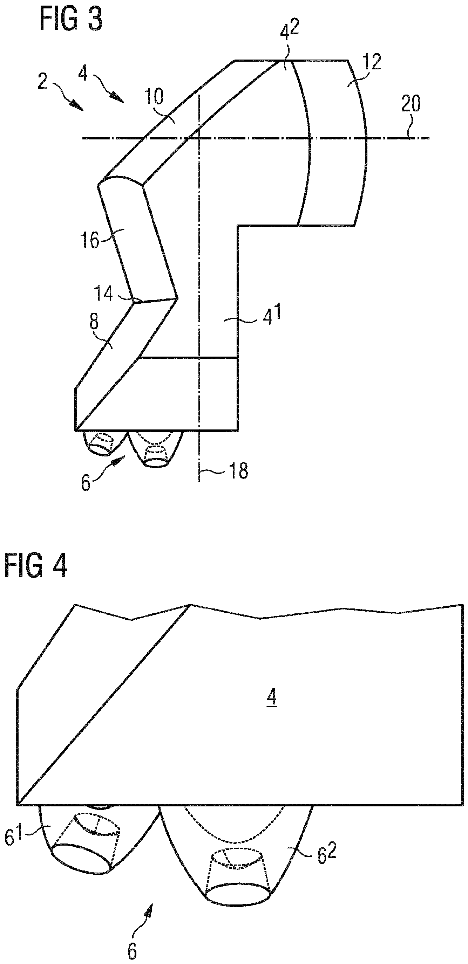

La face d'entrée 6 peut comprendre des collimateurs $6^1$ et $6^2$. Ils sont davantage visibles à la figure 4. En l'occurrence ils peuvent former des protubérances faisant saillie du corps et formant une surface extérieure qui peut être généralement circulaire. Chacune de ces protubérances comprend une cavité destinée à recevoir une des sources lumineuses. La surface intérieure des protubérances délimitant la cavité forme un premier dioptre avec l'air ambiant, provoquant une réfraction des rayons la traversant. La surface extérieure des protubérances forme un deuxième dioptre avec l'air ambiant. En fonction de l'angle d'incidence des rayons la rencontrant, ceux-ci peuvent être réfléchis par le principe de réflexion totale. En effet, en optique géométrique, le phénomène de réflexion totale survient lorsqu'un rayon lumineux arrive sur la surface de séparation de deux milieux d'indices optiques différents avec un angle d'incidence supérieur à une valeur critique : il n'y a alors plus de rayon réfracté transmis et seul subsiste un rayon réfléchi. Ce angle d'incidence limite $\vartheta$ est obtenu par application de la loi de Snell-Decartes, à savoir que $\theta = \sin^{-1} \frac{n_2}{n_1}$, où $n_2$ est l'indice de réfraction de l'air et $n_1$ est l'indice de réfraction du matériau transparent ou translucide formant la protubérance. Pour un matériau comme du polycarbonate d'indice de réfraction de l'ordre 1.591, l'angle limite de réfraction $\vartheta$ est de l'ordre de 39°. La surface extérieure des protubérances formant les deuxièmes dioptres peut présenter un profil parabolique ou elliptique.

Le corps 4 du module 2 comprend une face intermédiaire 16 entre la première face de réflexion 8 et la deuxième face de réflexion 10. Comme cela est particulièrement visible aux figures 2 et 3, la face intermédiaire 16 et la première face de réflexion 8 présentent un profil concave et forment à leur intersection un bord de coupure 14 des rayons se propageant dans le corps 4. En effet, la majeure partie des rayons se propagent depuis la face d'entrée 6 vers la deuxième face de réflexion 10 en passant devant le bord de coupure 14, c'est-à-dire sans subir de réflexion intermédiaire. Or une partie des rayons provenant de la face d'entrée 6 rencontre la première face de réflexion 8, plus précisément la portion de ladite face qui est à adjacente au bord de coupure 14. Ces rayons sont alors réfléchis, avantageusement par le principe de réflexion totale (décrit précédemment en relation avec les protubérances $6^1$ et $6^2$ de la face d'entrée 6). Dans ce cas, la face de réflexion 8 n'a pas besoin de recevoir un traitement réfléchissant. La réflexion d'une partie des rayons par la première face de réflexion a pour effet de renvoyer ces rayons vers une portion supérieure de la deuxième face de réflexion 10 et/ou de la face de sortie 12, avec des angles d'incidence importants ayant pour effet de réfracter ces rayons vers une portion basse du faisceau lumineux. La première face de réflexion, en association avec le bord de coupure, est couramment appelée « plieuse », en ce qu'elle « replie » une partie des rayons vers une portion basse du faisceau lumineux, assurant ainsi une fonction de coupure horizontale du faisceau.

La première face de réflexion 8 forme avantageusement un angle compris entre 5° et 40° avec la direction moyenne des faisceaux lumineux se propageant depuis la face d'entrée jusqu'à ladite face de réflexion.

A la figure 2, on peut observer que la première face de réflexion 8 peut comprendre deux portions $8^1$ et $8^2$ adjacentes, ces deux portions formant une arête $8^3$. Il en va de même pour la face intermédiaire 16 qui peut également comprendre deux portions $16^1$ et $16^2$ formant une arête $16^3$. Les deux arêtes $8^3$ et $16^3$ sont avantageusement alignées et adjacentes bout-à-bout. Il en résulte que le bord de coupure 14, dans cette configuration, n'est pas rectiligne mais bien constitué de deux segments adjacents bout-à-bout.

La deuxième face de réflexion 10 peut être généralement galbée, en l'occurrence convexe vu de l'extérieur au corps 4. Il en va de même pour la face de sortie 12. La deuxième face de réflexion 10 réfléchit avantageusement les rayons par le principe de réflexion totale (décrit précédemment en relation avec les protubérances $6^1$ et $6^2$ de la face d'entrée 6). Dans ce cas, la face de réflexion 10 n'a pas besoin de recevoir un traitement réfléchissant.

En référence à la figure 3, le corps 4 peut comprendre une première portion $4^1$ s'étendant généralement suivant un axe longitudinal généralement transversal, avantageusement perpendiculaire, à la face d'entrée 6. L'angle formé par ces deux axes est avantageusement compris entre 60° et 120°. Les rayons se propagent ainsi généralement suivant l'axe longitudinal 18, depuis la face d'entrée 6 jusqu'à la deuxième face de réflexion 10, en passant, pour certains, par une réflexion sur la première face de réflexion 8. Le corps peut également comprendre une deuxième portion $4^2$ s'étendant transversalement à la première et généralement suivant l'axe optique 20. Ce dernier représente la direction moyenne des rayons lumineux sortant de la face de sortie 12.

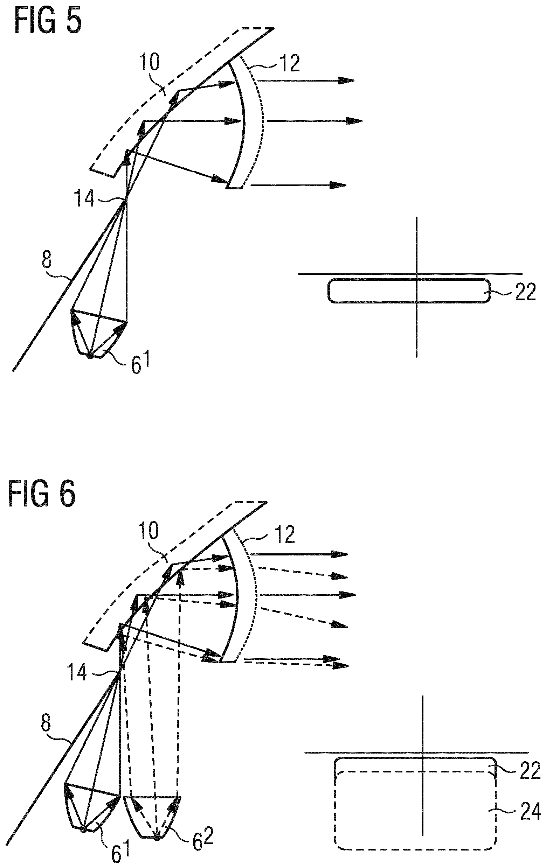

Les figures 5 et 6 illustrent le principe de propagation des rayons au sein du corps 4 du module 2 des figures 1 à 4.

A la figure 5, on peut observer que les rayons lumineux produits par le collimateur $6^1$ convergent en un point ou un segment focal passant par le bord de coupure 14. Cela signifie que la majorité, voire la grande majorité, des rayons provenant du collimateur à foyer $6^1$ en question passent devant ou sur le bord de coupure 14 sans subir de réflexion. Ces rayons rencontrent alors la deuxième face de réflexion 10 pour y être réfléchis en direction de la face de sortie 12. Les courbures de la deuxième surface de réflexion 10 et/ou de la surface de sortie sont calculées pour former un faisceau lumineux suivant l'axe optique du module. En l'occurrence, les rayons provenant du ou des collimateurs $6^1$ forment la portion 22 du faisceau, à savoir la portion supérieure avec le bord de coupure.

La figure 6 illustre le parcours des rayons lumineux produits par le collimateur $6^1$, comme illustré à la figure 5, avec, en plus, les rayons lumineux produits par le collimateur $6^2$. Il est fait référence à la description de la figure 5 pour les rayons du collimateur $6^1$. On peut observer que les rayons produits par le collimateur $6^2$ sont généralement parallèles les uns aux autres et passent majoritairement devant le bord de coupure 14. Comme cela est visible à la figure 6, ces rayons rencontrent la deuxième surface de réflexion 10 avec des angles d'incidence plus faibles que les rayons provenant de l'autre collimateur $6^1$. Ces rayons sont alors réfléchis suivant des directions telles, qu'après réfraction au travers de la face de sortie 12, ils forment la portion inférieure 24 du faisceau lumineux.

La conjugaison des deux types de collimateurs $6^1$ et $6^2$ permet ainsi de former un faisceau avec une coupure maîtrisée et une portion basse homogène et puissante.

Comme cela est visible aux figures 1 à 4, la face d'entrée 6 peut comprendre plusieurs collimateurs à foyers $6^1$ et plusieurs collimateurs $6^2$. Ces deux types de collimateurs sont disposés en rangées s'étendant transversalement à l'axe optique. Chacun des collimateurs d'une rangée permet ainsi de participer à la formation du faisceau dans une direction latérale. Le ou les collimateurs à foyer $6^1$ est/sont avantageusement disposé en arrière par rapport aux autres collimateurs.

Aux figures 5 et 6, on peut observer que la coupure réalisée apparait être généralement rectiligne. Or la réglementation impose un ressaut, couramment désigné par l'expression anglo-saxonne « kink ». Le ressaut de la coupure peut être réalisé par le module moyennant un profil approprié du bord de coupure. Alternativement, le ressaut peut être assuré par un autre module disposé à côté du module des figures 1 à 6, dont le faisceau vient s'ajouter au faisceau produit par le module principal.

Les sources lumineuses du ou des modules peuvent être disposées sur un support commun, comme par exemple une platine avec circuit imprimé.

Un ou plusieurs modules tels que décrits ci-avant peuvent être intégrés dans un boîtier en vue de réaliser un projecteur.

**Revendications**

1. Module lumineux (2), notamment pour véhicule automobile, comprenant un corps (4) en matériau translucide ou transparent avec :

   - une face d'entrée (6) de rayons lumineux produits par une ou plusieurs sources lumineuses ;
   - une première face de réflexion (8) avec un bord de coupure (14) des rayons provenant de la face d'entrée (6) ;
   - une face de sortie (12) des rayons lumineux en un faisceau de sortie suivant un axe optique (20) du module ;

   **caractérisé en ce qu'**il comprend, en outre :

   - une deuxième face de réflexion (10), vers la face de sortie, des rayons provenant de la première face de réflexion (8).

2. Module lumineux (2) suivant la revendication 1, **caractérisé en ce que** la première face de réflexion (8) forme un dioptre apte à réfléchir, par le principe de réflexion totale, une partie des rayons provenant de la face d'entrée (6).

3. Module lumineux (2) suivant l'une des revendications 1 et 2, **caractérisé en ce que** la première face de réflexion (8) forme un angle compris entre 5° et 40° avec la direction moyenne des faisceaux lumineux se propageant depuis la face d'entrée (6) jusqu'à ladite face de réflexion (8).

4. Module lumineux (2) suivant l'une des revendications 1 à 3, **caractérisé en ce que** la première face de réflexion (8) comprend deux portions adjacentes ($8^1$, $8^2$) formant une arête ($8^3$) dirigée vers la deuxième face de réflexion (10) et/ou la face de sortie (12), lesdites portions ($8^1$, $8^2$) formant, transversalement à ladite arête ($8^3$), un profil convexe.

5. Module lumineux (2) suivant l'une des revendications 1 à 4, **caractérisé en ce que** le bord de coupure (14) est formé par l'intersection de la première face de réflexion (8) avec une face intermédiaire (16) située entre la première face de réflexion (8) et la deuxième face de réflexion (10), ladite première face de réflexion (8) et ladite face intermédiaire (16) formant un profil concave.

6. Module lumineux (2) suivant la revendication 5, **caractérisé en ce que** la face intermédiaire (16) comprend deux portions adjacentes ($16^1$, $16^2$) formant une arête ($16^3$) dirigée vers la deuxième face de réflexion (10), lesdites portions ($16^1$, $16^2$) formant, transversalement à ladite arête ($16^3$), un profil convexe.

7. Module lumineux (2) suivant l'une des revendications 5 et 6, **caractérisé en ce que** la deuxième face de réflexion (10) s'étend entre la face intermédiaire (16) et la face de sortie (12).

8. Module lumineux (2) suivant l'une des revendications 1 à 7, **caractérisé en ce que** la deuxième face de réflexion (10) est généralement courbe et convexe.

9. Module lumineux (2) suivant l'une des revendications 1 à 8, **caractérisé en ce que** la deuxième face de réflexion (10) forme un dioptre apte à réfléchir, par le principe de réflexion totale, les rayons provenant de la première face de réflexion (8).

10. Module lumineux (2) suivant l'une des revendications 1 à 9, **caractérisé en ce que** le corps (4) comprend une première portion ($4^1$) s'étendant depuis la face d'entrée (6) jusqu'à la deuxième face de réflexion (10) suivant une direction principale (18) formant un angle compris entre 60° et 120° avec l'axe optique (20).

**11.** Module lumineux (2) suivant la revendication 10, **caractérisé en ce que** le corps (4) comprend une deuxième portion ($4^2$) s'étendant depuis la deuxième face de réflexion (10) jusqu'à la face de sortie (12), suivant l'axe optique (20).

**12.** Module lumineux (2) suivant l'une des revendications 1 à 11, **caractérisé en ce que** la face d'entrée (6) comprend un ou plusieurs collimateurs ($6^2$) aptes à dévier les rayons lumineux d'une ou plusieurs sources lumineuses, respectivement, de manière à former un ou plusieurs faisceaux de rayons dirigés vers la deuxième face de réflexion (10) et passant devant le bord de coupure (14).

**13.** Module lumineux (2) suivant la revendication 12, **caractérisé en ce que** le collimateur, ou chacun des collimateurs ($6^2$), est formé par une protubérance du corps avec une surface extérieure circulaire préférentiellement de profil elliptique, ladite protubérance comprenant une cavité apte à recevoir la source lumineuse correspondante.

**14.** Module lumineux (2) suivant l'une des revendications 1 à 13, **caractérisé en ce que** la face d'entrée (6) comprend un ou plusieurs collimateurs ($6^1$) aptes à dévier les rayons lumineux d'une ou plusieurs sources lumineuses, respectivement, vers un point ou segment de convergence situé sur le bord de coupure (14).

**15.** Module lumineux (2) suivant la revendication 14, **caractérisé en ce que** le collimateur ou chacun des collimateurs ($6^1$), est formé par une protubérance du corps, ayant une surface extérieure circulaire de profil elliptique et une cavité apte à recevoir la source lumineuse correspondante.

FIG 1

FIG 2

FIG 3

FIG 4

FIG 5

10
12
14
8
6$^1$
22

FIG 6

10
12
14
8
6$^1$
6$^2$
22
24

Europäisches
Patentamt

European
Patent Office

Office européen
des brevets

## RAPPORT DE RECHERCHE EUROPEENNE

Numéro de la demande

EP 19 15 2472

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (IPC) |
| A | EP 2 719 940 A2 (AUTOMOTIVE LIGHTING REUTLINGEN [DE]) 16 avril 2014 (2014-04-16) * alinéa [0047] - alinéa [0108] * * figure 15 * ----- | 1 | INV. G02B6/00 F21S41/00 |
| A | DE 10 2011 013211 A1 (AUTOMOTIVE LIGHTING REUTLINGEN [DE]) 6 septembre 2012 (2012-09-06) * alinéa [0050] - alinéa [0086] * * figure 6 * ----- | 1 | |
| X | US 2006/087860 A1 (ISHIDA HIROYUKI [JP]) 27 avril 2006 (2006-04-27) * alinéa [0027] - alinéa [0083] * * figures 1,8 * ----- | 1-3, 8-12,14 | |
| | | | DOMAINES TECHNIQUES RECHERCHES (IPC) F21S G02B |

Le présent rapport a été établi pour toutes les revendications

| Lieu de la recherche | Date d'achèvement de la recherche | Examinateur |
|---|---|---|
| La Haye | 8 février 2019 | Blokland, Russell |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 2472

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2019

| Document brevet cité au rapport de recherche | Date de publication | Membre(s) de la famille de brevet(s) | Date de publication |
|---|---|---|---|
| EP 2719940 A2 | 16-04-2014 | CN 103727474 A<br>DE 102012218684 A1<br>EP 2719940 A2<br>US 2014104864 A1 | 16-04-2014<br>17-04-2014<br>16-04-2014<br>17-04-2014 |
| DE 102011013211 A1 | 06-09-2012 | CN 103443534 A<br>DE 102011013211 A1<br>EP 2683979 A1<br>US 2014016343 A1<br>WO 2012119976 A1 | 11-12-2013<br>06-09-2012<br>15-01-2014<br>16-01-2014<br>13-09-2012 |
| US 2006087860 A1 | 27-04-2006 | JP 2006127856 A<br>US 2006087860 A1 | 18-05-2006<br>27-04-2006 |

**EP 3 492 955 A1**

**RÉFÉRENCES CITÉES DANS LA DESCRIPTION**

**Documents brevets cités dans la description**

- FR 3010772 A1